(19) Europäisches Patentamt
European Patent Office
Office européen des brevets

(11) EP 2 348 356 A1

(12) **EUROPÄISCHE PATENTANMELDUNG**

(43) Veröffentlichungstag:
**27.07.2011 Patentblatt 2011/30**

(51) Int Cl.:
***G02F 1/141*** *(2006.01)*

(21) Anmeldenummer: **10180673.5**

(22) Anmeldetag: **08.06.1999**

(84) Benannte Vertragsstaaten:
**DE FR GB**

(30) Priorität: **08.06.1998 DE 19825487**

(62) Dokumentnummer(n) der früheren Anmeldung(en) nach Art. 76 EPÜ:
**99929152.9 / 1 090 327**

(27) Früher eingereichte Anmeldung:
**08.06.1999 EP 99929152**

(71) Anmelder: **AZ Electronic Materials (Germany) GmbH**
**65203 Wiesbaden (DE)**

(72) Erfinder:
- **Dübal, Hans-Rolf**
  **65343, Eltville (DE)**
- **Wingen, Rainer**
  **65719, Hofheim (DE)**
- **Nonaka, Toshiaki**
  **Tokyo 124-0022 (JP)**

(74) Vertreter: **Féaux de Lacroix, Stefan**
**Isenbruck Bösl Hörschler LLP**
**Eastsite One**
**Seckenheimer Landstrasse 4**
**68163 Mannheim (DE)**

Bemerkungen:
Diese Anmeldung ist am 28-09-2010 als Teilanmeldung zu der unter INID-Code 62 erwähnten Anmeldung eingereicht worden.

(54) **Monostabiles ferroelektrisches Aktivmatrix-Display**

(57) Das monostabile ferroelektrische Aktivmatrix-Display enthält eine Flüssigkristallschicht in Form einer Monodomäne mit einer eindeutig definierten Richtung der Schichtennormalen z der smC*-Phase, wobei die Flüssigkristallschicht eine Bücherbord-Geometrie aufweist.

EP 2 348 356 A1

## Beschreibung

Der Ersatz der Kathodenstrahlröhre (Bildröhre) durch einen flachen Bildschirm erfordert eine Displaytechnologie, die gleichzeitig eine hohe Bildauflösung, d.h. mehr als 1000 Zeilen, eine hohe Bildhelligkeit (>200 $Cd/m^2$), einen hohen Kontrast (>100:1), eine hohe Bildfrequenz (>60 Hz), eine ausreichende Farbdarstellung (>16 Mio Farben), ein großes Bildformat (>40 cm Bildschirmdiagonale), eine geringe Leistungsaufnahme und einen weiten Betrachtungswinkel ermöglicht und zudem kostengünstig herstellbar ist. Bislang existiert keine Technologie, die alle diese Merkmale gleichzeitig in vollem Umfang erfüllt.

Viele Hersteller haben Bildschirme auf der Basis nematischer Flüssigkristalle entwickelt, die seit einigen Jahren beispielsweise im Bereich von Notebook PC, Personal Digital Assistants und Desktop Monitoren im Einsatz sind. Dabei werden die Technologien STN (Supertwisted Nematics), AM-TN (Active Matrix - Twisted Nematics), AM-IPS (Active Matrix - In Plane Switching), AM-MVA (Active Matrix - Multidomain Vertically Aligned) verwendet, die in der Literatur ausführlich beschrieben werden, siehe z.B. T. Tsukuda, TFT/LCD: Liquid Crystal Displays Addressed by Thin-Film Transistors, Gordon and Breach 1996, ISBN 2-919875-01-9 und darin zitierte Literatur; SID Symposium 1997, ISSN-0097-966X, Seiten 7 bis 10, 15 bis 18, 47 bis 51, 213 bis 216, 383 bis 386, 397 bis 404 und darin zitierte Literatur. Darüber hinaus werden die Technologien PDP (Plasma Display Panel), PALC (Plasma Addressed Liquid Crystal), ELD (Electro Luminescent Display) und FED (Field Emission Display) angewandt, die ebenfalls im zitierten SID Bericht erläutert sind.

Clark und Lagerwall (US 4,367,924) konnten zeigen, daß der Einsatz ferroelektrischer Flüssigkristalle (FLC) in sehr dünnen Zellen zu optoelektrischen Schalt- oder Anzeigeelementen führt, die im Vergleich zu den herkömmlichen TN ("twisted nematic")-Zellen um bis zu einem Faktor 1000 schnellere Schaltzeiten haben, siehe auch EP-A 0 032 362. Aufgrund dieser und anderer günstiger Eigenschaften, z. B. der bistabilen Schaltmöglichkeit und des nahezu blickwinkelunabhängigen Kontrasts, sind FLCs grundsätzlich für Anwendungsgebiete wie Computerdisplays und Fernsehgeräte geeignet, wie ein seit Mai 1995 in Japan von Canon vermarkteter Monitor zeigt.

Für die Verwendung von FLCs in elektrooptischen oder vollständig optischen Bauelementen benötigt man entweder Verbindungen, die smektische Phasen ausbilden und selbst optisch aktiv sind, oder man kann durch Dotierung von Verbindungen, die zwar solche smektischen Phasen ausbilden, selbst aber nicht optisch aktiv sind, mit optisch aktiven Verbindungen ferroelektrische smektische Phasen induzieren. Die gewünschte Phase soll dabei über einen möglichst großen Temperaturbereich stabil sein.

Die einzelnen Bildelemente (Pixel) eines LC-Displays sind üblicherweise in einer x,y Matrix angeordnet, die durch die Anordnung je einer Serie von Elektroden (Leiterbahnen) entlang der Reihen und der Spalten an der Unter- bzw. Oberseite des Displays gebildet wird. Die Kreuzungspunkte der horizontalen (Reihen-) und vertikalen (Spalten-) Elektroden bilden adressierbare Pixel.

Diese Anordnung der Bildpunkte bezeichnet man üblicherweise als eine passive Matrix. Zur Adressierung wurden verschiedene Multiplex-Schemata entwickelt, wie beispielsweise in Displays 1993, Vol. 14, Nr. 2, S. 86-93 und Kontakte 1993 (2), S. 3-14 beschrieben. Die passive Matrixadressierung hat den Vorteil einer einfacheren Herstellung des Displays und damit verbundenen geringen Herstellkosten, jedoch den Nachteil, daß die passive Adressierung immmer nur zeilenweise erfolgen kann, was dazu führt, daß die Adressierungszeit des gesamten Bildschirms bei N Zeilen das N-fache der Zeilenadressierungszeit beträgt. Bei üblichen Zeilenadressierungszeiten von ca. 50 Mikrosekunden bedeutet das eine Bildschirmadressierungszeit von ca. 60 Millisekunden bei z.B. HDTV Norm (High Definition TV, 1152 Zeilen), d.h. einer maximalen Bildfrequenz von ca. 16 Hz. Diese Frequenz ist für die Darstellung bewegter Bilder zu gering. Zudem ist die Darstellung von Graustufen schwierig. Mizutani et.al. haben anläßlich der FLC-Konferenz in Brest, Frankreich (20.-24 Juli 1997, siehe Abstract Book 6th International Conference on Ferroelectric Liquid Crystals, Brest / France) ein passives FLC-Display mit digitalen Graustufen vorgestellt, bei dem jeder der RGB-Bildpunkte (RGB= red, green, blue) in Unterpunkte unterteilt wurde, wodurch vermittels partiellem Schalten die Darstellung von Grauwerten in digitaler Form ermöglicht wird. Bei N Grauwerten unter Verwendung dreier Grundfarben (rot, grün, blau) ergeben sich $3^N$ Farben. Der Nachteil dieser Methode ist eine starke Erhöhung der Anzahl benötigter Bildschirmtreiber und damit der Kosten. Im Falle des in Brest gezeigten Bildschirms wurden dreimal soviele Treiber benötigt, wie bei einem normalen FLC Display ohne digitale Graustufen.

Bei der sogenannten Aktivmatrix-Technologie (AMLCD) wird üblicherweise ein nichtstrukturiertes Substrat mit einem Aktivmatrix-Substrat kombiniert. An jedem Pixel des Aktivmatrixsubstrates ist ein elektrisch nichtlineares Element, beispielsweise ein Dünnschichttransistor, integriert. Bei dem nichtlinearen Element kann es sich auch um Dioden, Metall-Insulator-Metall u.ä. Elemente handeln, die vorteilhaft mit Dünnschichtverfahren hergestellt werden und in der einschlägigen Literatur beschrieben sind, siehe z.B. T. Tsukuda, TFT/LCD: Liquid Crystal Displays Addressed by Thin-Film Transistors, Gordon and Breach 1996, ISBN 2-919875-01-9 und darin zitierte Literatur.

Aktivmatrix-LCDs werden üblicherweise mit nematischen Flüssigkristallen im TN-(twisted nematics), ECB-(electrically controlled birefringence), VA- (vertically aligned) oder IPS- (in plane switching) Modus betrieben. In jedem Fall wird durch die aktive Matrix an jedem Bildpunkt ein elektrisches Feld individueller Stärke erzeugt, das eine Orientierungsänderung und damit eine Änderung der Doppelbrechung erzeugt, die wiederum im polarisierten Licht sichtbar ist. Ein schwerwiegender Nachteil dieser Verfahren ist die mangelnde Videofähigkeit bedingt durch die zu langen Schaltzeiten nematischer Flüssigkristalle.

Unter anderem aus diesem Grunde wurden Flüssigkristallanzeigen, die auf einer Kombination aus ferroelektrischen Flüssigkristallmaterialien und Aktiven Matrix - Elementen beruhen,vorgeschlagen, siehe z.B. WO 97112355 oder Ferroelectrics 1996, 179, 141-152, W.J.A.M. Hartmann, IEEE Trans. Electron. Devices 1989, 36,(9;Pt. 1), 1895-9.

Hartmann nutzte eine Kombination aus der sogenannten 'Quasi-bookshelf Geometrie' (QBG) von FLC und einer TFT (Thin-Film-Transistor) Aktivmatrix und erhielt gleichzeitig eine hohe Schaltgeschwindigkeit, Graustufen und eine hohe Transmission. Allerdings ist die QBG nicht über einen weiten Temperaturbereich stabil, da durch die Temperaturabhängigkeit der smektischen Schichtdicke die feldinduzierte Lagenstruktur aufbricht oder sich dreht. Darüber hinaus nutzt Hartmann ein FLC-Material mit einer Spontanpolarisation von mehr als 20 $nC/cm^2$, was bei Bildpunkten mit realistischen Dimensionen von z.B. 0,01 $mm^2$ Fläche zu großen elektrischen Ladungen führt (bei Sättigung gilt Q = 2 A P, A= Bildpunktfläche, P= spontane Polarisation), die z.B. mit kostengünstig herstellbaren amorphen Silizium - TFT während der Öffnungszeit des TFT nicht auf den Bildpunkt gelangen können. Aus diesen Gründen wurde diese Technologie bisher nicht weiterverfolgt.

Während Hartmann die ladungskontrollierte Bistabilität zur Darstellung einer nahezu kontinuierlichen Grauskala ausnutzt, haben Nito et. al. eine monostabile FLC-Geometrie vorgeschlagen, siehe Journal of the SID, 1/2, 1993, Seiten 163-169, bei der das FLC-Material mit Hilfe verhältnismäßig hoher Spannungen derart orientiert wird, daß nur eine stabile Lage entsteht, aus der dann durch Anlegen eines elektrischen Feldes über einen Dünnschichttransistor eine Reihe von Zwischenzuständen erzeugt werden, die bei angepaßter Zellengeometrie zwischen gekreuzten Polarisatoren einer Reihe von verschiedenen Helligkeitsgraden (Grauwerten) entsprechen.

Ein Nachteil dieses Vorgehens ist jedoch das Auftreten einer Streifentextur im Display, die den Kontrast und die Helligkeit dieser Zelle begrenzt (siehe Abb. 8 im o.a. Zitat). Die nachteilige Streifentextur läßt sich durch eine Behandlung mit einer hohen elektrischen Spannung (20-50 V) in der nematischen bzw. cholesterischen Phase (siehe S. 168 des o.a. Zitates) zwar korrigieren; jedoch ist eine solche Feldbehandlung nicht für die Massenfertigung von Bildschirmen geeignet und führt in der Regel auch nicht zu temperaturstabilen Texturen. Darüber hinaus ergibt diese Methode lediglich ein Schalten in einem Winkelbereich von bis zu maximal dem einfachen Tiltwinkel, der bei dem von Nito et. al. verwendeten Material bei ca. 22 ° liegt (siehe S. 165 Abb. 6) und damit nur eine Transmission von maximal 50 % der Transmission zweier paralleler Polarisatoren ergibt.

Aufgabe der vorliegenden Erfindung ist die Bereitstellung einer ferroelektrischen Aktiv-Matrix-Flüssigkristallanzeige, die eine ferroelektrische Flüssigkristallmischung enthält, wobei die Flüssigkristallmischung eine monostabile Lage einnimmt, dabei jedoch keine Streifentextur bildet, temperaturstabil ist und eine sehr hohe Maximaltransmission sowie einen sehr hohen Kontrast ermöglicht.

Die Aufgabe wird erfindungsgemäß gelöst durch ein monostabiles ferroelektrisches Aktivmatrix-Display, enthaltend eine Flüssigkristallschicht, vorzugsweise in Chevron-C2-Geometrie, in Form einer Monodomäne mit einer eindeutig definierten Richtung der Schichtennormalen z der chiral-smektischen Phase, wobei des Verhältnis der Summe von Pretilt- und Lagenkippwinkel zu Tiltwinkel (WR=(LkW + Prw)/Tiw) größer 0,1 ist und vorzugsweise der Betrag der dielektrischen Anisotropie DA kleiner 3 ist.

Vorzugsweise liegt in der Flüssigkristallschicht die Spontanpolarisation P zwischen 0,1 und 15 $nC/cm^2$.

Vorzugsweise liegt in der Flüssigkristallschicht der Tiltwinkel Tiw zwischen 9 und 40°.

Vorzugsweise beträgt das Verhältnis des Produktes von Ankerungsstärke und dem Sinus des Tiltwinkels zu der Spontanpolarisation (AS sin Tiw/P) weniger als 20 V/$\mu$m.

Die Aufgabe wird ferner gelöst durch ein monostabiles ferroelektrisches Aktivmatrix-Display, enthaltend eine Flüssigkristallschicht in Chevron-C1-Geometrie in Form einer Monodomäne mit einer eindeutig definierten Richtung der Schichtennormalen z der SmC*-Phase, wobei der Pretiltwinkel Prw mindestens 5° beträgt und das Verhältnis von Pretiltwinkel zu Lagenkippwinkel (Prw/Lkw) größer 0,7 ist.

Die Aufgabe wird ferner gelöst durch ein monostabiles ferroelektrisches Aktivmatrix-Display, enthaltend eine Flüssigkristallschicht in Bücherbord-Geometrie in Form einer Monodomäne mit einer eindeutig definierten Richtung der Schichtennormalen z der smC*-Phase, wobei der Pretiltwinkel Prw mindestens 1 ° beträgt.

Die Aufgabe wird ferner gelöst durch ein monostabiles ferroelektrisches Avtivmatrix-Display, enthalten eine Flüssigkristallschicht in Form einer Monodomäne mit einer eindeutig definierten Richtung der Schichtennormalen z der smC*-Phase, die folgende Eigenschaften aufweist:

- Spontanpolarisation P zwischen 0,1 und 15 $nC/cm^2$,
- Tiltwinkel Tiw zwischen 9 und 45°,
- Absolutbetrag des Verhältnisses von Lagenkippwinkel zu Tiltwinkel von mindestens 0,2,

- Helixganghöhe in der chiralnematischen (cholesterischen) Phase innerhalb des Temperaturbereiches von 5°C oberhalb des smektisch-nematischen Phasenübergangs oder, wenn der Existenzbereich der nematischen (cholesterischen) Phase kleiner als 5°C ist, dann in einem Temperaturbereich von mindestens 80% des nematischen Phasenbereichs von mindestens 50 μm und
- Absolutbetrag der Dielektrischen Anisotrophie DA von weniger als 3.

Vorzugsweise weist die Flüssigkristallschicht eines oder mehrere, insbesondere alle der nachstehenden Merkmale auf:

- Der Winkel zwischen der Schichtennormalen z der smC*-Phase und der Vorzugsrichtung n der nematischen bzw. cholesterischen Phase (N*-Phase) liegt in einem Bereich des 0,5-fachen bis 1,0-fachen des smC*-Tiltwinkels, mindestens jedoch 5°,
- Die ferroelektrische Flüssigkristallschicht besitzt eine Phasenfolge

I*-N*-smC*

wobei zwischen der N*- und der smC*-Phase eine smA*-Phase mit einem Existenzbereich von maximal 2°, vorzugsweise maximal 1° liegen kann.

Das erfindungsgemäße Aktivmatrix - FLCD enthält als optisch wirksame Schicht vorzugsweise ein ferroelektrisch flüssigkristallines Medium (Flüssigkristallphase) mit einer Phasenfolge von

Isotrop - Nematisch oder Cholesterisch (N*)- smektisch C*

oder einer Phasenfolge

Isotrop - Nematisch oder Cholesterisch (N*)- smektisch A *- smektisch C*,

wobei die smektisch A* Phase einen Existenzbereich (Phasenbereich) von maximal 2 °C, vorzugsweise maximal 1 °C, besonders bevorzugt maximal 0.5°C besitzt. Der Stern (*) an der Phasenbezeichnung gibt an, daß es sich um eine chirale Phase handelt.

Die Herstellung der Displays erfolgt vorzugsweise nach einem Verfahren, bei dem man die Flüssigkristallschicht in den Zwischenraum zwischen einer geriebenen Obersubstratplatte und einer geriebenen Untersubstratplatte des Aktiv-Matrix-Displays einbringt, wobei die Reiberichtungen auf der Ober- und Untersubstratplatte im wesentlichen parallel sind, und die Flüssigkristallphase aus der isotropen Phase abkühlt, wobei zumindest beim Phasenübergang N* → smC* beziehungsweise N* → smA* → smC* eine elektrische Spannung am Display anliegt.

Die FLC-Mischung wird in ein Aktivmatrix-Display gefüllt. Die Herstellung und die Komponenten eines solchen AM-Displays ist ausführlich in der vorstehend aufgeführten Literatur von Tsukuda, beschrieben. Die Dicke der FLC-Schicht beträgt jedoch anders als bei nematischen Displays nur 0,7 bis 2,5, bevorzugt 1-2 μm. Darüber hinaus sind die Reiberichtungen auf Ober- und Untersubstratplatten im wesentlichen parallel. Der Begriff "im wesentlichen parallel" schließt antiparallele oder schwach, d.h. bis zu 10° gekreuzte Reiberichtungen mit ein.

Wichtig für die Funktionsweise dieses Displays ist nun, daß bei der Herstellung des Displays beim kontrollierten Abkühlen eine elektrische Gleichspannung, vorzugsweise unterhalb 5 V, angelegt und beim Phasenübergang N* --> smC* bzw. N--> smA* --> smC* beibehalten wird, die dazu führt, daß das gesamte Display eine monostabile Monodomäne einnimmt, die zwischen gekreuzten Polarisatoren vollkommen dunkel erscheint.

Nach Erhalt dieser Domäne wird die Gleichspannung abgeschaltet. Die so erhaltene Textur ist im Gegensatz zu Hartmanns oben angeführtemAnsatz oder im Gegensatz zu konventionellen bistabilen FLCD monostabil. Dies bedeutet, daß sich der bevorzugte n-Direktor (der die Vorzugsrichtung der Moleküllängsachsen angibt), befindet sich in Reibrichtung der Zelle befindet, wohingegen der z-Direktor (der die Vorzugsrichtung der smektischen Lagennormale angibt) sich ungefähr um den Betrag des Tiltwinkels schräg zur Reiberichtung befindet. Diese Konstellation ist gerade entgegengesetzt zur gewöhnlichen bistabilen Zelle nach Clark und Lagerwall, bei der der z-Direktor in Reibrichtung liegt.

Im Unterschied zu Nitos Ansatz gibt es bei dieser Orientierung gerade keine zwei Lagennormalen und damit keine zwei Orientierungsdomänen, die letztlich zu der oben erwähnten störenden Streifentextur führen, sondern nur

eine eindeutige Richtung des z-Direktors und daher eine Monodomäne. Darüber hinaus ist nun der zweifache Tiltwinkel, der zu 100% Transmission bezogen auf parallele Polarisatoren führt, zugänglich, d.h. es wird eine doppelte Helligkeit erzielt.

Das so erhaltene Display erscheint bei geeignetem Drehwinkel zwischen gekreuzten Polarisatoren vollkommen dunkel. Bei Anlegen einer Ansteuerspannung von nur wenigen Volt erscheint es hell, wobei die Helligkeit über die Spannung kontinuierlich variiert werden kann und bei Sättigung nahezu die Helligkeit zweier paralleler Polarisationsfolien besitzt. Der Winkel zwischen der Vorzugsrichtung der nematischen (bzw. cholesterischen) Phase und der Schichtennormale (z-Direktor) ist im Idealfall und damit vorzugsweise gleich dem Tiltwinkel der smektischen C-Phase, bzw. zumindest im wesentlichen gleich dem Tiltwinkel. "Im wesenlichen" im Sinne dieser Erfindung bedeutet vorzugsweise einen Wertebereich vom halben bis zum vollen, besonders bevorzugt 0,5- bis 1-fachen Tiltwinkel, jedoch mindestens von 5°. Das erfindungsgemäße ferroelektrische Aktivmatrix-Flüssigkristalldisplay ist in hohem Maße praxistauglich, insbesondere für TV und HDTV oder Multimedia, da es hohe Transmission, kurze Schaltzeit, Grauskala und daher volle Farbfähigkeit, kostengünstige Herstellung und einen weiten Temperaturbereich miteinander vereinbart. Darüber hinaus läßt sich das Display vorzugsweise bei Spannungen von ≤ 10 Volt, bevorzugt ≤ 8 V, besonders bevorzugt ≤ 5 V betreiben.

Für die Darstellung von Grauwerten bzw. von möglichst vielen naturgetreuen Farben soll die Kennlinie (Transmission aufgetragen gegen Spannung) der Flüssigkristallmischung einerseits flach genug sein, um mit den verfügbaren Spannungen die Grauwerte zielsicher zu adressieren, andererseits soll die Sättigungsspannung nicht zu hoch sein.

Die Sättigungsspannung V90, bei der 90% der Maximaltransmission erreicht werden, sollte nicht zu hoch sein, damit das Display mit Spannungen unterhalb 30V, vorzugsweise unterhalb 15 V, bevorzugt unterhalb 10 V, besonders bevorzugt unterhalb 8 V, speziell unterhalb 5 V betrieben werden kann. Die Schwellspannung V10 sollte vorzugsweise insofern an V90 angepaßt werden, um zu gewährleisten, daß die Kennlinienbreite KLB groß genug ist, um eine ausreichend hohe Anzahl an Grauwerten adressieren zu können. Dies ist im allgemeinen der Fall, wenn die Kennlinienbreite KLB = V90-V10 mindestens 100 mV, vorzugsweise mindestens 200 mV, bevorzugt mindestens 500 mV, besonders bevorzugt mindestens 1 V, speziell mindestens 1.5 V beträgt.

Darüber hinaus sollte im allgemeinen die Maximaltransmission der Zelle mindestens 40 % (bezogen auf eine Leerzelle zwischen zwei parallelen Polarisationsfolien), vorzugsweise mindestens 50%, bevorzugt mindestens 70 %, besonders bevorzugt mindestens 80 %, speziell mindestens 90% betragen. Weiterhin sollte die T,V-Kennlinie vorzugsweise streng monoton steigend (mit zunehmender Spannung) sein. Ein Transmissionsrückgang nach Erreichen eines Transmissionsmaximums ist nicht wünschenswert.

Gegenstand dieser Erfindung ist daher die Auswahl von Flüssigkristallen und Mischungen davon mit geeigneten Materialparametern zur vorteilhaften Einstellung der Kennlinie.

Gegenstand der Erfindung ist ferner ein monostabiles Aktiv-Matrix - FLC - Display, bei welchem durch die Auswahl von Flüssigkristallen bzw. deren Mischungen durch gezielte Kombination mehrerer Materialeigenschaften des ferroelektrischen Flüssigkristalls eine optimale Kennlinie erhalten wird, sowie die Verwendung von Flüssigkristallmischungen dieser Eigenschaften für Aktiv-Matrix-FLC Displays.

Insbesondere wird unter Aktivmatrixdisplay im Sinne der vorliegenden Erfindung auch ein LCD verstanden, bei dem eines der beiden Substrate durch die Rückseite eines IC-Chips (IC = integrated circuit) ersetzt wird, wie beispielsweise bei D.M. Walba, Science 270, 250-251 (1995) beschrieben.

In den Beispielen und in der Beschreibung der Erfindung werden Abkürzungen verwendet, die in der nachstehenden Tabelle erläutert werden.

Begriffsbestimmungen und Abkürzungen (Abk.):

| Begriff | Abk. | Einheit |
|---|---|---|
| Ankerungsstärke | AS | $J/m^3$ |
| Tiltwinkel | Tiw | Grad |
| Pretiltwinkel | Prw | Grad |
| Lagenkippwinkel | Lkw | Grad |
| Schichtendrehwinkel | Sdw | Grad |
| Spontanpolarisation | P | $nC/cm^2$ |
| Schwellspannung | V10 | Volt |
| Sättigungsspannung | V90 | Volt |
| Dielektrische Anisotropie | DA | - |
| Optische Anisotropie | OA | - |

(fortgesetzt)

| Begriff | Abk. | Einheit |
|---|---|---|
| Kennlinienbreite (=V90-V10) | KLB | Volt |
| Kennlinie (optische Transmission als Funktion der Spannung) | - | - |
| Chevron 1 Geometrie (hier ist Lkw >0) | C1 | - |
| Chevron 2 Geometrie (hier ist Lkw <0) | C2 | - |
| Bücherbordanordnung (hier ist Lkw = 0, Idealfall) | BS | - |
| Helixganghöhe | pitch | µm |
| Isotrope Phase | I | - |
| Nematische bzw. chiral nematische oder cholesterische Phase (Begriffe werden hier synonym verwendet) | N* | - |
| smektisch A Phase bzw. chirale smektisch A Phase | smA* | - |
| chirale smektische C* Phase | smC* | - |
| Zellendicke | d | µm |
| Elektrisches Feld (=Spannung / Zellendicke) | E | V/µm |
| Freie Energiedichte | g | J/$m^3$ |
| Sättigungstransmission | Tsat | % |
| Optische Transmission | T | % |
| Winkelrelation (WR = (Lkw + Prw)/Tiw) | WR % | |

D.C. Ulrich und S.J. Elston beschreiben in Ferroelectrics, band 178, S.177 bis 186 (1996) die C1-, C2-Geometrien usw.

Die Kennlinie der erfindungsgemäßen ferroelektrischen Flüssigkristallzelle wird von einer Reihe von Parametern beeinflußt, die vorzugsweise für sich allein oder in Kombination bevorzugte Wertebereiche einnehmen sollen, damit optimale Schaltbedingungen erreicht werden. Insbesondere handelt es sich hierbei um die Spontanpolarisation (P), den Tiltwinkel (Tiw), den Lagenkippwinkel (Lkw), den Pretiltwinkel (Ptw), die Ankerungsstärke (AS), die dielektrische Anisotropie (DA), ferner der Schichtendrehwinkel (Sdw), die Zellendicke (d), die Helixganghöhe der cholesterischen Phase (pitch) und der smektischen C*-Phase sowie die optische Anisotropie (OA).

Es wird gefunden, daß alle diese Parameter die Kennlinie beeinflussen, wenngleich in unterschiedlichem Ausmaß. Die Kennlinie (T,V) sollte vorzugsweise folgende Eigenschaften besitzen.

Es wurde - im Gegensatz zu allen üblichen Erfahrungen bei ferroelektrischen LCD - gefunden, daß die Kennlinie nicht oder nur in sehr geringem Maße von der Rotationsviskosität beeinflußt wird, stattdessen z.B. die Sättingungsspannung V90 stark von der Spontanpolarisation (P) und der Verankerungsstärke (AS) bestimmt wird.

Die Spontanpolarisation (P) soll vorzugsweise zwischen 0.1 nC/$cm^2$ und 15 nC/$cm^2$ (gemeint ist hier immer der Absolutbetrag von P) liegen , vorzugsweise zwischen 0.2 und 10 nC/$cm^2$, bevorzugt ist 0.4 bis 8 nC/$cm^2$, besonders bevorzugt ist 0.5 bis 6 nC/$cm^2$, speziell 0.8 bis 3.5 nC/$cm^2$.

Der Tiltwinkel soll vorzugsweise im Bereich von 9° bis 45° liegen, vorzugsweise zwischen 12° und 35°, bevorzugt ist 14° bis 31°, besonders bevorzugt ist 17° bis 27°, speziell 19° bis 25°.

Der Schichtendrehwinkel (Sdw = Winkel zwischen der Vorzugsrichtung der nematischen Phase und der smC* Schichtennormale) soll vorzugsweise mindestens 5° betragen.

Der Absolutbetrag der dielektrischen Anisotropie soll vorzugsweise weniger als 3 (drei) betragen, bevorzugt ist weniger als 2.5, besonders bevorzugt ist weniger als 1.8, speziell weniger als 1.2.

Das Produkt der Verankerungsenergie (AS) und dem Sinus des Tiltwinkels dividiert durch die Spontanpolarisation (P) soll vorzugsweise weniger als 20 V/µm betragen, vorzugsweise weniger als 15 V/µm, bevorzugt weniger als 12 V/µm, besonders bevorzugt weniger als 9 V/µm, speziell weniger als 6 V/µm.

Die Parameterangaben beziehen sich auf mindestens eine Temperatur im Arbeitsbereich des ferroelektrischen Flüssigkristalldisplays.

Das erfindungsgemäße Display kann nicht nur im Bereich der smektischen C* Phase, sondern auch -zumindest teilweise- im Bereich einer anderen geneigten ('tilted') smektischen Phase betrieben werden unter sinngemäßer Übertragung der oben angeführten Eigenschaften.

Das erfindungsgemäße monostabile Aktivmatrix- FLC Display kann in der Chevron C1, der Chevron C2 oder der Bücherbord ('bookshelf) bzw. Quasi-bookshelf Anordnung (oder 'Geometrie') betrieben werden. Für alle drei Geometrien gilt die bevorzugte Kombination von Wertebereichen der Spontanpolarisation und des Tiltwinkels:

| | Spontanpolarisation P Wertebereich in $nC/cm^2$ | Tiltwinkel Tiw Wertebereich in Grad |
|---|---|---|
| vorzugsweise | <15 | 9 bis 45 |
| bevorzugt | 0.2 bis 10 | 12 bis 35 |
| besonders bevorzugt | 0.4 bis 8 | 14 bis 31 |
| ganz besonders bvorzugt | 0.5 bis 6 | 17 bis 27 |
| speziell | 0.8 bis 3.5 | 19 bis 25 |

Noch spezieller bevorzugt sind oben angeführte Kombinationen aus P und Tiw zusammen mit einem Absolutbetrag der dielektrischen Anisotropie, die kleiner ist als drei (3), bevorzugt kleiner als zwei (2), besonders bevorzugt kleiner als 1.5, speziell kleiner 1.2.

Die Ganghöhe der cholesterischen Helix (pitch) sollte in einem Temperaturbereich von 5° oberhalb des Überganges zur smektischen Phase oder bei kleinerem Existenzbereich der cholesterischen Phase vorzugsweise im Bereich von 80% dieses Existenzbereiches länger als 50μm sein. Bevorzugt ist ein pitch von mindestens 70μm, ganz besonders bevorzugt von mindestens 100 μm zu erzielen, um hohe Kontraste zu erzielen.

In der C2 - Geometrie, die bei kleinen Pretiltwinkeln normalerweise bevorzugt ist und bei hohen Pretiltwinkeln im Grenzfall(Ptw > Tiw) völlig verschwindet, soll der Lagenkippwinkel (Lkw) zusammen mit dem Pretiltwinkel (Ptw) vorzugsweise in folgender Relation zu dem Tiltwinkel (Tiw) stehen : das Verhältnis WR aus der Summe aus Pretiltwinkel und Lagenkippwinkel zum Tiltwinkel (also (Lkw+Ptw)/Tiw) soll im allgemeinen mindestens 0.1, vorzugsweise mindestens 0.15, bevorzugt mindestens 0.25, besonders bevorzugt mindestens 0.5, speziell mindestens 0.7 betragen. Dabei soll der Betrag der dielektrischen Anisotropie DA kleiner 3 sein.

Ganz speziell ergeben sich vorteilhafte Kennlinien mit den in der nachstehenden Tabelle aufgeführten Kombinationen :

| C2 Geometrie | Spontanpolarisation P Wertebereich in $nC/cm^2$ | Tiltwinkel Tiw Wertebereich in Grad | WR Wertebereich |
|---|---|---|---|
| vorzugsweise | < 15 | 9 bis 45 | größer als 0.1 |
| bevorzugt | 0.2 bis 10 | 12 bis 35 | größer als 0.15 |
| besonders bevorzugt | 0.4 bis 8 | 14 bis 31 | größer als 0.3 |
| ganz besonders bvorzugt | 0.5 bis 6 | 17 bis 27 | größer als 0.5 |
| speziell | 0.8 bis 3.5 | 19 bis 25 | größer als 0.7 |

Noch spezieller bevorzugt sind oben angeführte Kombinationen aus P und Tiw zusammen mit einem Absolutbetrag der dielektrischen Anisotropie, die kleiner als 3, bevorzugt kleiner als 2, besonders bevorzugt kleiner als 1.5, speziell kleiner als 1.2 ist.

Generell ist die C2 Geometrie gegenüber C1 und 'bookshelf' bevorzugt.

In der C1 - Geometrie, die bei hohen Pretiltwinkeln bevorzugt auftritt, soll bei geeignetem Lagenkippwinkel der Pretiltwinkel mindestens 5° sein, da sonst kein Schalten bei kleiner Spannung auftritt.

Vorteilhaft sollen bei geeignetem Lagenkippwinkel Lagenkippwinkel (Lkw) und Pretiltwinkel (Prw) in folgender Relation stehen: das Verhältnis aus Pretiltwinkel und Lagenkippwinkel soll größer 0,7 sein.

Ganz speziell ergeben sich vorteilhafte Kennlinien mit den in der nachstehenden Tabelle aufgeführten Kombinationen (für C1-Geometrie):

| | Spontanpolarisation P Wertebereich in $nC/cm^2$ | Tiltwinkel Tiw Wertebereich in Grad | Prw/Lkw Wertebereich |
|---|---|---|---|
| vorzugsweise | < 15 | 9 bis 45 | größer als 0.25 |

(fortgesetzt)

| | Spontanpolarisation P Wertebereich in $nC/cm^2$ | Tiltwinkel Tiw Wertebereich in Grad | Prw/Lkw Wertebereich |
|---|---|---|---|
| bevorzugt | 0.2 bis 14 | 12 bis 35 | größer als 0.3 |
| besonders bevorzugt | 0.3 bis 12 | 14 bis 31 | größer als 0.33 |
| ganz besonders bevorzugt | 0.4 bis 9 | 17 bis 27 | größer als 0.4 |
| speziell | 0.5 bis 7 | 19 bis 25 | größer als 0.5 |

Noch spezieller bevorzugt sind oben angeführte Kombinationen aus P und Tiw zusammen mit einer dielektrischen Anisotropie von größer als -1, vorzugsweise einer positiven dielektrischen Anisotropie, d.h. > 0. -

In der Bücherbordgeometrie, die im Sinne der vorliegenden Erfindung für den Bereich -5° < Lkw > +5° definiert sein soll (ideal Lkw=0), soll der Pretiltwinkel im allgemeinen mindestens 1°, vorzugsweise mindestens 2° betragen. Besonders bevorzugt soll der Pretiltwinkel mindestens 1° und die Spontanpoarisation mindestens 0.1 $nC/cm^2$, höchstens 15 $nC/cm^2$ betragen und der Tiltwinkel mindestens 12 ° betragen.

Die Spontanpolarisation in obigen Tabellen kann auch vorzugsweise 0.1 bis 15 $nC/cm^2$ betragen.

Eine für den Einsatz im erfindungsgemäßen Display besonders geeignete Mischung hat mindestens sechs (6), vorzugsweise mindestens acht (8), besonders bevorzugt mindestens neun (9), speziell mindestens elf (11) Komponenten, die so ausgewählt werden, daß die Spontanpolarisation zwischen 0.1 und 15 $nC/cm^2$ liegt, der Tiltwinkel zwischen 17° und 27° liegt, das Verhältnis von Lagenkippwinkel zu Tiltwinkel mindestens 0.3 beträgt, die Ganghöhe der chiral nematischen Phase mindestens 50 μm (Bereich von 5 ° C oberhalb des Phasenüberganges) beträgt, der Absolutbetrag der dielektrischen Anisotropie kleiner als 3 ist, und die Phasenfolge

isotrop-nematisch-smektisch C*

oder

isotrop-nematisch-smektisch A-smektisch C*

mit einem Existenzbereich der smektisch A-Phase von höchstens 2° C, besitzt.

Die nachfolgenden Beispiele sollen die Erfindung näher erläutern.

Beispiele:

1. Herstellung einer orientierten, monostabilen FLC-Zelle:

Ein mit transparent - leitfähigem Indium-Zinnoxid-beschichtetes Glassubstrat wird in einem fotolithographischen Prozeß strukturiert, so daß ein Elektrodenmuster erhalten wird. Die transparenten Leiterbahnen dieser Elektrodenstruktur werden zur elektrischen Ansteuerung des Displays mittels eines Funktionsgenerators verwendet, und so wird das Schaltverhalten eines Dünnschichttransistors simuliert. Zwei derartig strukturierte Glasscheiben, die die Ober- und Unterseite des Displays- also die Trägerplatten - bilden, werden mit Orientierungsschichten versehen, diese werden gerieben und mit Hilfe eines Kleberahmens unter Zusatz einer Konzentration von 0,5 Gew% Abstandhalter-Kugeln vom Durchmesser 1,3 μm zusammengefügt. Der Kleber wird durch vorsichtiges Erhitzen gehärtet, die Flüssigkristallmischung bei 100°C durch Kapillarkräfte befüllt und die Zelle durch langsames Abkühlen auf eine Temperatur oberhalb des I-N* Phasenüberganges gebracht. Bei dieser Temperatur wird eine Gleichspannung von 4 V angelegt und dann der Abkühlungsprozess bis auf 22 °C weitergeführt. Die Gleichspannung wird sodann abgeschaltet. Es wird eine monostabile Monodomäne erhalten, die zwischen gekreuzten Polarisatoren völlig dunkel erscheint.

2. Bestimmung der Kennlinie (T,V-Charakteristik):

Die Zelle wird nun mit monopolaren Pulsen der Länge 10 ms und des Abstandes von 30 ms mit Spannungen variabler Amplitude vermittels Funktionsgenerator (Modell Wavetech) und Verstärker (Hersteller: Krohn-Hite) beschaltet, und die Transmission wird vermittels einer Fotodiode und Oszilloskop gemessen. Man erhält damit die Transmission (als Fotodiodensignal) in Abhängigkeit von der Spannung. Diese Kennlinie weist in der Regel eine Sättigung der Transmission bei hohen Spannungen auf, dieser Wert wird als 100% bezeichnet. V10 ist nun die

Schwellspannung, bei der die Helligkeit gerade 10% der Sättigungstransmisson beträgt, V90 ist die Spannung, bei der 90% der Sättigungstransmission erzielt werden.

3. Bestimmung der Verankerungsstärke (AS)
Die empirische Verankerungsstärke AS wird aus dem in Beispiel 2 erhaltenen Wert für V90, der Schichtdicke und der Spontanpolarisation nach folgender Formel erhalten.

$$AS\ (\text{in J/m}^3) = 10 * V90\ (\text{in Volt}) * P\ (\text{in nC/cm}^2) / \sin(Tiw) * d\ (\text{in } \mu m)$$

Hat man für eine Mischung und einen Zellentyp den Wert für AS bestimmt, so können Variationen von P, d aber auch von anderen Parametern vorgenommen werden, sofern sich die chemische Natur der Mischungszusammensetzung nicht zu stark verändert und daher der Wert für AS auf das Design eines AM-FLC Displays übertragen werden kann.
4. Ein FLC-Display der Zellendicke 1.25 µm wird mit einer FLC-Mischung mit der Phasenfolge I-N*-smC*, die folgende physikalische Daten besitzt:

| | |
|---|---|
| Geometrie: | C2 |
| Tiltwinkel: | 21° |
| Lagenkippwinkel: | 18° |
| Lkw/Tiw: | 0.86 |
| Pretiltwinkel: | 0° |
| Optische Anisotropie: | 0.17 |

befüllt und orientiert.
Es werden bei Variation von P und AS folgende T,V-Charakteristiken (Kennlinien) erhalten:

| Nr. | P | AS | V10 | V90 | KLB=V90-V10 |
|---|---|---|---|---|---|
| | $nC/cm^2$ | $J/m^3$ | V | V | V |
| | | | | | |
| A | 0.5 | 83 | 2.5 | 8.0 | 5.5 |
| B | 2 | 195 | 2.4 | 4.4 | 2.0 |
| C | 4 | 195 | 0.8 | 2.2 | 1.4 |
| D | 8 | 195 | 0.5 | 1.1 | 0.5 |
| E | 16 | 195 | 0.2 | 0.5 | 0.3 |
| F | 0.1 | 7 | 1.2 | 3.6 | 2.4 |

Vorteilhaftes Schalten ist im Bereich von P von 0.1 bis 15 $nC/cm^2$ möglich, bei niedrigen P-Werten allerdings vorzugsweise verbunden mit schwacher Verankerung.
5. Ein FLC-Display der Zellendicke 1.25 µm wird mit einer FLC-Mischung mit der Phasenfolge I-N*-smC*, die folgende physikalische Daten besitzt:

| | |
|---|---|
| Geometrie: | C2 |
| Pretiltwinkel: | 0° |
| Optische Anisotropie: | 0.17 |

befüllt und orientiert.
Es werden bei Variation des Tiltwinkels Tiw folgende Kennlinien erhalten:

| Nr. | P | Lkw | Tiw | V10 | V90 | KLB=V90-V10 | Tsat |
|---|---|---|---|---|---|---|---|
| | $nC/cm^2$ | Grad | Grad | V | V | V | % |
| A | 0.5 | 18 | 21 | 2.5 | 8.0 | 5.5 | 68 |
| B | 3 | 18 | 24 | 0.6 | 1.5 | 0.9 | 72 |
| C | 3 | 18 | 27 | 0.7 | 1.7 | 1.0 | 70 |
| D | 3 | 18 | 30 | 0.8 | 1.8 | 1.0 | 52 |
| E | 1.5 | 5 | 35 | 3.0 | 3.3 | 0.3 | 34* |
| F | 1.5 | 30 | 35 | 0.8 | 4.5 | 3.7 | 55** |
| G | 1.5 | 10 | 12 | 0.3 | 1.2 | 0.9 | 42 |
| H | 1.5 | 5 | 15 | 0.7 | 1.5 | 0.8 | 60 |
| I | 1.5 | 10 | 15 | 0.6 | 1.8 | 1.2 | 58 |
| J | 1.5 | 14 | 15 | 0.5 | 1.9 | 1.4 | 56 |
| K | 1.5 | 3 | 9 | 0.3 | 0.8 | 0.5 | 28 |
| L | 1.5 | 35 | 40 | 0.5 | 5.0 | 4.5 | 50 |
| * hier pretilt 5°, ** mit Zwischenmaximum bei 5 V / 73% | | | | | | | |

Vorteilhaftes Schalten ist im Bereich von Tiw = 10° bis 35° möglich. In diesen Beispielen wurde das Produkt aus optischer Anisotropie und Zellendicke nicht optimiert, so daß sich eine maximale Transmission von nur ca. 80% ergibt. Durch Anpassung z.B. der Zellendicke lassen sich alle hier erhaltenen Maximaltransmissionen um den Faktor 1.25 erhöhen. Damit erhält man bei bevorzugten Konfigurationen nahezu 100%.

6. Ein FLC-Display der Zellendicke 1.25 µm wird mit einer FLC-Mischung mit der Phasenfolge I-N*- smA*(mit Existenzbereich < 2°)-smC*, die folgende physikalische Daten besitzt:

| | |
|---|---|
| Geometrie: | C2 |
| Dielektrische Anisotropie: | -1 |
| Optische Anisotropie: | 0.17 |

befüllt und orientiert.

Es werden bei Variation des Lkw und Prw folgende T,V-Charakteristiken (Kennlinien) erhalten WR=(Lkw+Prw)/Tiw:

| Nr. | P | Lkw | Tiw | Prw | WR | V10 | V90 | KLB=V90-V10 |
|---|---|---|---|---|---|---|---|---|
| | $nC/cm^2$ | Grad | Grad | Grad | - | V | V | V |
| A | 1.5 | 5 | 25 | 20 | 1.00 | 1.2 | 3.0 | 1.8 |
| B | 1.5 | 5 | 25 | 5 | 0.40 | 1.7 | 2.8 | 1.1 |
| C | 1.5 | 5 | 25 | 5 | 0.40 | 3.3 | 5.0 | 1.7 |
| D | 1.5 | 20 | 25 | 5 | 1.00 | 2.2 | 6.0 | 3.8 |
| E | 1.5 | 5 | 35 | 5 | 0.28 | 2.9 | 3.4 | 0.5 |
| F | 2.0 | 0 | 21 | 3 | 0.13 | 1.2 | 1.5 | 0.3 |
| G | 2.0 | 1 | 30 | 1 | 0.07 | - | - | kein Schalten |
| H | 2.0 | 1 | 31 | 2 | 0.096 | - | - | kein Schalten |
| J | 2.0 | 5 | 21 | 0 | 0.24 | 2.4 | 3.1 | 0.7 |

Vorteilhaftes Schalten ist im Bereich von WR>0.1 möglich. Bei kleineren Werten ist die Kennlinie zu steil, um Grauwerte zu realisieren oder man beobachtet sogar gar kein Schalten.

7. Ein FLC-Display der Zellendicke 1.25 µm wird mit einer FLC-Mischung mit der Phasenfolge I-N*-smC*, die folgende

physikalische Daten besitzt:

| | |
|---|---|
| Geometrie: | C2 |
| Tiltwinkel: | 25° |
| Lagenkippwinkel: | 15° |
| Lkw/Tiw: | 0.60 |
| Pretiltwinkel: | 0° |
| Dielektrische Anisotropie: | -1 |
| Optische Anisotropie: | 0.17 |
| Spontanpolarisation: | 1.5 nC/$cm^2$ |

befüllt und orientiert.
Es werden bei Variation von AS folgende T,V-Charakteristiken (Kennlinien) erhalten:

| Nr. | AS | V10 | V90 | KLB=V90-V10 |
|---|---|---|---|---|
| | J/$m^3$ | V | V | V |
| A | 74 | 1.2 | 2.6 | 1.4 |
| B | 159 | 2.5 | 5.6 | 3.1 |
| C | 43 | 0.6 | 1.5 | 0.9 |
| D | | | | |
| E | 2 | 0.2 | 0.7 | 0.5* |
| F | | | | |
| * hier Ps = 0.75 nC/$cm^2$ | | | | |

Vorteilhafte Kennlinien werden bei niedrigen Werten von AS*sin(Tiw)/P erhalten, insbesondere bei AS*sin(Tiw)/P < 20 V/μm, bevorzugt <16 V/μm.
8. Ein FLC-Display der Zellendicke 1.25 μm wird mit einer FLC-Mischung mit der Phasenfolge I-N*-smC*, die folgende physikalische Daten besitzt:

| | |
|---|---|
| Geometrie: | C2 |
| Tiltwinkel: | 22° |
| Lagenkippwinkel: | 15° |
| Lkw/Tiw: | 0.682 |
| Pretiltwinkel: | 0° |
| Optische Anisotropie: | 0.17 |
| Spontanpolarisation: | 0.5 nC/$cm^2$ |

befüllt und orientiert.

| Nr. | DA | V10 | V90 | Tsat | Bemerkung |
|---|---|---|---|---|---|
| | - | V | V | % | |
| A | +3.2 | - | - | 4% | praktisch kein Schalten |
| B | -3.1 | - | - | 9% | praktisch kein Schalten |
| C | 0 | 3 | 8 | 78% | |
| D | +0.5 | 0.8 | 2.0 | 75% | hier Ps=2 nC/$cm^2$ |

Vorteilhafte Kennlinien werden bei niedrigen Werten des Absolutbetrages der dielektrischen Anisotropie erhalten, insbesondere bei |DA| < 3, vorzugsweise |DA| <2, besonders bevorzugt |DA| < 1.5, speziell |DA| < 1.2.

9. Ein FLC-Display der Zellendicke 1.25 μm wird mit einer FLC-Mischung mit der Phasenfolge I-N*-smC*, die folgende physikalische Daten besitzt:

| | |
|---|---|
| Geometrie: | C1 |
| Spontanpolarisation: | 1.5 $nC/cm^2$ |
| Tiltwinkel: | 20° |
| Lagenkippwinkel: | 15° (C1, andere Kipprichtung als C2) |
| Lkw/Tiw: | 0.75 |
| Dielektrische Anisotropie: | -1 |
| Optische Anisotropie: | 0.17 |

befüllt und orientiert.
Es werden bei Variation des Pretiltwinkels folgende T,V-Charakteristiken (Kennlinien) erhalten:

| Nr. | Prw | V10 | V90 | KLB=V90-V10 |
|---|---|---|---|---|
| | Grad | V | V | V |
| A | 0 | Kein Schalten | | |
| B | 10 | Kein Schalten | | |
| | | | | |
| C | 20 | 1.6 | 1.8 | 0.2 |
| D | 25 | 2.2 | 2.5 | 0.3 |
| E | 30 | 2.3 | 3.1 | 0.8 |
| F | 40 | 2.4 | 4.0 | 1.6 |

In der C1 Geometrie wird bei kleinen Pretiltwinkeln kein Schalten beobachtet. Bei dem brauchbaren Minimalwert des Tiltwinkels von mehr als 9° wird mindestens ein Pretilt von 5° benötigt, um eine verwertbare Kennlinie zu erhalten.
Wird der Lagenkippwinkel unterhalb von 5° (dem Betrage nach) eingestellt, so wird ein Schalten nur mit einem Pretiltwinkel von mindestens einem Grad beobachtet.
Prw ist mindestens 5°, Prw/Lkw größer 0,7.

**Patentansprüche**

1. Monostabiles ferroelektrisches Aktivmatrix-Display, enthaltend eine Flüssigkristallschicht in Bücherbord-Geometrie in Form einer Monodomäne mit einer eindeutig definierten Richtung der Schichtennormalen z der smC*-Phase, wobei das Verhältnis der Summe von Pretilt- und Lagenkippwinkel zu Tiltwinkel (WR = (Lkw + Prw)/Tiw) größer 0,1 und der Betrag der dielektrischen Anisotropie DA kleiner 3 ist.

2. Aktivmatrix-Display nach Anspruch 1, **dadurch gekennzeichnet, dass** in der Flüssigkristallschicht die Spontanpolarisation P kleiner 15 $nC/cm^2$ ist.

3. Aktivmatrix-Display nach Anspruch 1 oder 2, **dadurch gekennzeichnet, dass** in der Flüssigkristallschicht der Tiltwinkel Tiw zwischen 9 und 40° liegt.

4. Aktivmatrix-Display nach einem der Ansprüche 1 bis 3, **dadurch gekennzeichnet, dass** das Verhältnis des Produktes von Ankerungsstärke und dem Sinus des Tiltwinkels zu der Spontanpolarisation (AS sin Tiw/P) weniger als 20 V/μm beträgt.

5. Monostabiles ferroelektrisches Aktivmatrix-Display, enthaltend eine Flüssigkristallschicht in Bücherbord-Geometrie in Form einer Monodomäne mit einer eindeutig definierten Richtung der Schichtennormalen z der smC*-Phase, wobei der Pretiltwinkel Prw mindestens 1° beträgt.

**6.** Monostabiles ferroelektrisches Aktivmatrix-Display, enthaltend eine Flüssigkristallschicht in Bücherbord-Geometrie in Form einer Monodomäne mit einer eindeutig definierten Richtung der Schichtennormalen z der smC*-Phase, die folgende Eigenschaften aufweist:

- Spontanpolarisation P zwischen 0,1 und 15 $nC/cm^2$,
- Tiltwinkel Tiw zwischen 9 und 45°,
- Absolutbetrag des Verhältnisses von Lagenkippwinkel zu Tiltwinkel von mindestens 0,2,
- Helixganghöhe in der chiralnematischen (cholesterischen) Phase innerhalb des Temperaturbereiches von 5°C oberhalb des smektisch-nematischen Phasenübergangs von mindestens 50 μm und
- Absolutbetrag der Dielektrischen Anisotrophie DA von weniger als 3.

**7.** Aktivmatrix-Display nach einem der Ansprüche 1 bis 6, in dem die Flüssigkristallschicht eine oder mehrere der folgenden Eigenschaften aufweist:

- Der Winkel zwischen der Schichtennormalen z der smC*-Phase und der Vorzugsrichtung n der nematischen bzw. cholesterischen Phase (N*-Phase) liegt in einem Bereich des 0,5-fachen bis 1,0-fachen des smC*-Tiltwinkels, mindestens jedoch 5°C
- Die ferroelektrische Flüssigkristallschicht besitzt eine Phasenfolge

I*-N*-smC*

wobei zwischen der N*- und der smC*-Phase eine smA*-Phase mit einem Existenzbereich von maximal 2° liegen kann.

**8.** Verfahren zur Herstellung von Aktivmatrix-Displays nach einem der Ansprüche 1 bis 7, bei dem man die Flüssigkristallschicht in den Zwischenraum zwischen einer geriebenen Obersubstratplatte und einer geriebenen Untersubstratplatte des Aktivmatrix-Displays einbringt, wobei die Reiberichtungen auf der Ober- und Untersubstratplatte im Wesentlichen parallel, und die Flüssigkristallphase aus der isotropen Phase abkühlt, wobei zumindest beim Phasenübergang N*smC* bzw. N*smA*smC* eine elektrische Spannung am Display anliegt.

**9.** Aktivmatrix-Displays, herstellbar nach dem Verfahren gemäß Anspruch 8.

**10.** Verwendung von Aktivmatrix-Displays nach einem der Ansprüche 1 bis 7 und 9 im TV-, HDTV- oder Multimedia-Bereich oder im Bereich der Informationsverarbeitung, insbesondere in Notebook-PCs, Personal Digital Assistants und Desktop-Monitoren.

Europäisches Patentamt
European Patent Office
Office européen des brevets

# EUROPÄISCHER RECHERCHENBERICHT

Nummer der Anmeldung
EP 10 18 0673

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>A | US 5 617 229 A (YAMAMOTO YOSHITAKA [JP] ET AL) 1. April 1997 (1997-04-01)<br>* die vollständige Druckschrift, insbesondere die Passage in Spalte 5, Zeile 65 bis Spalte 6, Zeile 27, die Tabellen * | 5<br>1-4,6-10 | INV.<br>G02F1/141 |
| A | EP 0 455 160 A (SONY CORP) 6. November 1991 (1991-11-06)<br>* die gesamte Druckschrift, insbesondere der Abschnitt "Preparation of Liquid Crystal Cell" beginnend auf Seite 6 *Abbildung 6 | 1-10 | |
| A | NITO K ET AL: "A NOVEL SURFACE-STABILIZED MONOSTABLE FERROELECTRIC LCD", PROCEEDINGS OF THE INTERNATIONAL DISPLAY RESEARCH CONFERENCE, SAN DIEGO, OCT. 15 - 17, 1991, Nr. CONF. 11, 15. Oktober 1991 (1991-10-15), Seiten 179-182, XP000314350, INSTITUTE OF ELECTRICAL AND ELECTRONICS ENGINEERS ISBN: 0-7803-0213-3<br>* die gesamte Druckschrift * | 1-10 | |
| A | US 4 783 148 A (TSUBOYAMA AKIRA [JP] ET AL) 8. November 1988 (1988-11-08)<br>* die vollständige Druckschrift, insbesondere die Tabelle in Spalte 6 * | 1-10 | |

RECHERCHIERTE SACHGEBIETE (IPC)
G02F

Der vorliegende Recherchenbericht wurde für alle Patentansprüche erstellt

1

| Recherchenort | Abschlußdatum der Recherche | Prüfer |
|---|---|---|
| München | 7. Juni 2011 | Lerbinger, Klaus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 10 18 0673

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-06-2011

| Im Recherchenbericht angeführtes Patentdokument | Datum der Veröffentlichung | Mitglied(er) der Patentfamilie | Datum der Veröffentlichung |
|---|---|---|---|
| US 5617229 A | 01-04-1997 | CN 1106932 A | 16-08-1995 |
| | | JP 7064051 A | 10-03-1995 |
| EP 0455160 A | 06-11-1991 | DE 69127393 D1 | 02-10-1997 |
| | | DE 69127393 T2 | 26-03-1998 |
| | | JP 2982330 B2 | 22-11-1999 |
| | | JP 4212126 A | 03-08-1992 |
| | | US 5214523 A | 25-05-1993 |
| US 4783148 A | 08-11-1988 | JP 2667816 B2 | 27-10-1997 |
| | | JP 63077019 A | 07-04-1988 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4367924 A
- EP 0032362 A
- WO 97112355 A


### In der Beschreibung aufgeführte Nicht-Patentliteratur


- *Displays,* 1993, vol. 14 (2), 86-93
- Abstract Book 6th International Conference on Ferroelectric Liquid Crystals. 20. Juli 1997
- Thin-Film Transistors. **T. TSUKUDA.** TFT/LCD: Liquid Crystal Displays. Gordon and Breach, 1996
- *Ferroelectrics,* 1996, vol. 179, 141-152
- **W.J.A.M. HARTMANN.** *IEEE Trans. Electron. Devices,* 1989, vol. 36, 1895-9
- *Journal of the SID,* 1993, vol. 1/2, 163-169
- **D.M. WALBA.** *Science,* 1995, vol. 270, 250-251
- **D.C. ULRICH ; S.J. ELSTON.** *Ferroelectrics,* 1996, vol. 178, 177-186